# EUROPEAN PATENT SPECIFICATION

(11) **EP 3 704 364 B1**
(45) Date of publication and mention of the grant of the patent: **10.07.2024**
(21) Application number: 18801049.0
(22) Date of filing: 29.10.2018
(51) Int. Cl.: F01N 3/10, F01N 3/22, F01N 3/28, F01N 3/30, F01N 13/00, F01N 13/14

(54) **MOTOR VEHICLE COMPRISING A TWO-STROKE ENGINE AND AN EXHAUST SYSTEM**
KRAFTFAHRZEUG MIT ZWEITAKTMOTOR UND ABGASANLAGE
VÉHICULE À MOTEUR AVEC MOTEUR À DEUX TEMPS ET SYSTÈME D'ÉCHAPPEMENT

(30) Priority: 31.10.2017 IT 201700124022
(43) Date of publication of application: 09.09.2020
(73) Proprietor: Piaggio & C. S.P.A., 56025 Pontedera Pisa (IT)
(72) Inventor: SISI, Alessio, 56025 Pontedera (Pisa) (IT); TROCCHI, Domenico, 56025 Pontedera (Pisa) (IT)
(74) Representative: Pipoli, Massimo
(86) International application number: PCT/IB2018/058450
(87) International publication number: WO 2019/087039

(56) References cited:
- EP-A1- 1 703 099
- EP-A1- 1 970 546
- EP-A1- 1 970 547
- EP-B1- 1 703 099
- WO-A1-2009/041028
- DE-A1- 19 816 276

## Description

### TECHNOLOGICAL FIELD

The present invention relates to the field of exhaust systems, and in particular to mufflers for two- or three-wheel vehicles, as well as for mopeds.

### PRIOR ART

It is generally known to introduce an amount of air into the exhaust pipe of the exhaust gases expelled from an internal combustion engine to increase the oxygen content before entering a catalyst. The increase in oxygen content improves the catalysis of unburned substances let out from the engine in the catalyst.

This type of arrangement is particularly used in engines for motorcycles.

Since environmental regulations introduce increasingly stringent parameters relating to emissions, the aforementioned solution is now unsuitable for the purpose and does not comply with the emission standards known as Euro IV and Euro V.

Indeed, in two-stroke engines, a single injection of air upstream of the catalyst and downstream of the engine exhaust is not sufficient to catalyze in adequate manner polluting products such as: CO (carbon monoxide) and HC (unburned hydrocarbons), NOx (nitrogen monoxide) and particulate matter.

The problem of efficiently reducing the percentage of polluting elements in the atmosphere to comply with anti-pollution regulations after Euro IV for two-stroke engines is therefore particularly felt.

In the prior art there are also some examples of exhaust systems which are either entirely or partially active.

An example of entirely active system is patent EP1970547, in which the opening of the valves of the auxiliary air injection channels of the main exhaust pipe are electronically controlled to maintain the stoichiometric air/fuel ratio downstream of the engine. A similar document, but for motorcars, is patent DE 19816276.

An example of partially active system is patent EP1970546, in which the valve which regulates the auxiliary air injection in the main exhaust duct is passive, but the exhaust duct is provided with sensors designed to measure the oxygen content in the exhaust gas downstream of the auxiliary air intake, so as to adjust fuel flow and injection duration into the engine as a function of this.

These two known systems for four-stroke engines cannot guarantee their operation unless by using an electronic control loop, which may therefore deteriorate over time due to a fouling of the oxygen level reading sensors in the exhaust pipe.

### SUMMARY

The aforementioned drawbacks of the prior art are now solved by the object of the present invention, i.e. by an exhaust system as defined in claim 1.

The words "upstream" and "downstream" refer to the normal direction of flow of the exhaust gases in the exhaust system.

The expression " passive" means an exhaust system free from active control, i.e. of a control of the air quantity fed into the main exhaust pipe as a function of the air-to-fuel ratio present in any portion of the exhaust pipe downstream of the auxiliary air injection.

The first catalyst makes it possible to perform a first catalysis stage of the exhaust gases of the two-stroke engine.

The second catalyst makes it possible to perform a final catalysis of the exhaust gases of the two-stroke engine. With respect to catalysis performed by the first catalyst, the catalysis temperatures reached in the second catalyst are higher to allow a complete catalysis.

The first catalyst is used to rapidly increase the temperature of the exhaust gases let into the second catalyst.

The main exhaust pipe is the pipe which fluidically connects the outlet of the two-stroke engine to the muffler.

The first air injection pipe makes it possible to introduce ambient air into the main exhaust pipe and in particular into a zone upstream of the second catalyst. This solution makes it possible to increase the oxygen content inside the second catalyst, whereby improving the catalysis of the exhaust gases pre-catalyzed by the first catalyst.

The present system also comprises a second air injection pipe to introduce ambient air into the main exhaust pipe and into a zone upstream of the first catalyst. This solution makes it possible to increase the oxygen content inside the first catalyst, whereby improving the catalysis of exhaust gas exiting the engine.

The ambient air is sucked into the first air injection pipe through the end of said pipe opposite to the end connected to the main exhaust pipe. In the same manner, the ambient air is sucked into the second air injection pipe through the end of said pipe opposite to the end connected to the main exhaust pipe.

In particular, said first and second air injection pipes extend laterally from the main exhaust pipe. This arrangement is particularly simple and cost-effective to manufacture.

The ambient air is drawn into the air injection pipe by the suction pressure which is cyclically created in the main pipe portion to which the air injection pipe is connected. When the pressure inside the first and/or second exhaust pipe portion is lower than the atmospheric pressure, air is aspirated into the main pipe from the outside.

The average section area of the first and second air injection pipe is smaller than the average section area of the main exhaust pipe. This difference in the average port of the three pipes makes it possible to optimally adjust the volumetric flow rate of air which needs to enter into the main exhaust pipe.

Advantageously, the second catalyst can be arranged in the muffler to optimize the overall system dimensions. Said first catalyst may instead be arranged along the main exhaust pipe, in an intermediate position between the muffler and the engine, so as to optimize the overall system dimensions with respect to the vehicle.

The second catalyst may be arranged at a second end of the main exhaust pipe, i.e. the one opposite to the end connected to the two-stroke engine. In particular, the second catalyst may be connected to the main pipe downstream of a diverging conical portion thereof. This makes it possible to increase the gas pressure, whereby facilitating the crossing of the second catalyst by the exhaust gases. Moreover, by virtue of the increase in section, a second catalyst of larger size, and consequently larger catalyzing surface and lower losses, can be installed.

Alternatively, the outlet of the second catalyst may be connected to a further portion of the main exhaust pipe.

The ends of the first and second air injection pipes opposite to the main exhaust pipe may be connected to respective filters to prevent contaminants or impurities from reaching and compromising the catalysts. Said filters may be contained in a common filter box to optimize dimensions and facilitate assembly/disassembly.

In case of a single air injection pipe between the first and second catalyst, there is one filter, with a respective filter box which contains it.

Said first and second air injection pipes comprise respective check valves, being of the passive type, configured and arranged to allow an air flow from the filters and the main exhaust pipe and prevent flow in the opposite direction.

Since the flow of the exhaust gases expelled from the engine is pulsing, phases occur in the main exhaust pipe in which the pressure is higher than ambient pressure and phases in which the pressure in the pipe is lower than ambient pressure. These check valves prevent the release of exhaust gases from the air injection pipes during the overpressure phases in the first and/or second portion of the main exhaust pipe. Said check valves are uncontrolled valves, i.e. are mechanical actuated, and therefore are free from electromechanical operation. Said valves are thus not controlled as a function of the quantity of oxygen inside the main exhaust pipe, but only of the pressure inside it. Conversely, during the suction pressure phases of the first and/or second main exhaust pipe portion, the air will be aspirated from the outside.

Said exhaust system can further comprise a third upstream catalyst arranged downstream of said first end and upstream of said first air injection pipe.

This third upstream catalyst is arranged upstream of the first catalyst and immediately after the engine outlet makes it possible to ignite of the first catalyst. When the two-stroke engine is started, the initial exhaust gas temperature is low for a few engine revolutions. The third upstream catalyst or the first catalyst, in the version with three and two catalysts in total respectively, is used to raise the temperature of the initial exhaust gases quickly to a catalysis ignition threshold (so called "light-off") in the downstream catalysts.

For this reason and in order to facilitate the ignition of each downstream catalyst, the first catalyst or the third upstream catalyst may be arranged next to the first end of the main exhaust pipe.

Said system may further comprise a third downstream catalyst arranged downstream of the second catalyst and in the muffler. This third downstream catalyst makes it possible to further reduce the content of pollutants, by catalyzing the gases let out from the second catalyst.

The system may further comprise a third alternative downstream catalyst arranged downstream the second catalyst and in an expansion zone of the main exhaust pipe. This further catalyst makes it possible to further exhaust the gases exiting from the second catalyst, whereby further improving pollutant abatement.

The muffler in this case may be positioned downstream of the expansion zone of the exhaust pipe in order to improve exhaust system efficiency.

In this case, the first air injection pipe is connected to a filter and comprises a check valve configured and arranged to allow an air flow from the filter to the main exhaust pipe and not vice versa, with the same advantages discussed above.

Said first and second air injection pipes are configured to allow an air injection into the main pipe when the pressure in said first and/or second exhaust pipe portion is lower than atmospheric pressure, whereby adapting to the cyclic behavior of the two-stroke engine.

The catalysts of the system can be of the same type to optimize manufacturing costs. In particular, they may be of the three-way type to break down the various types of exhaust pollutants.

It is a second object of the present invention a motor vehicle, preferably a motorcycle, even more preferably a scooter, equipped with an exhaust system according to the first object of the present invention. Said exhaust system may be connected to the delivery of an engine of the two-stroke type of the aforesaid vehicle.

These and other advantages will be apparent from the following description of a preferred embodiment given by way of non-limiting example with reference to the accompanying drawings.

### DESCRIPTION OF THE DRAWINGS

The embodiments of the invention and the respective advantages associated with them may be appreciated more fully in the following detailed illustration, to be considered in connection with the accompanying drawings in which:
Fig. 1 is a diagrammatic view of the exhaust system according to a first example
Fig. 2 is a diagrammatic view of the exhaust system according to a first embodiment of the present invention;
Fig. 3 is a diagrammatic view of the exhaust system according to a second embodiment of the present invention;
Fig. 4 is a diagrammatic view of the exhaust system according to a third embodiment of the present invention;
Fig. 5 is a diagrammatic view of a vehicle comprising a system according to the first embodiment of the exhaust system;
Fig. 6 is a diagrammatic view of the exhaust system according to a second example
Fig. 7 is a diagrammatic view of the exhaust system according to a third example

### DETAILED DESCRIPTION

The following description of one or more embodiments of the invention refers to the accompanying drawings. The same reference numerals in the drawings identify identical or similar elements. The drawings are not necessarily in scale. Additionally, the following detailed description must not be considered limiting of the invention itself. The scope of the invention is defined by the appended claims. The technical details, structures or features of the solutions described below may be mutually combined in any manner.

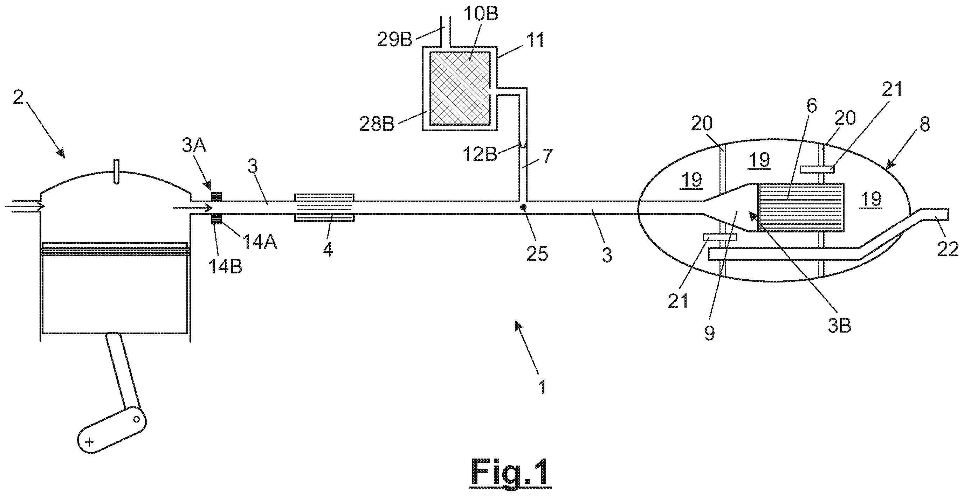

Figures 1, 2, 3 and 4 show an exhaust system typically designed for a motorcycle of the scooter type with a two-stroke engine.

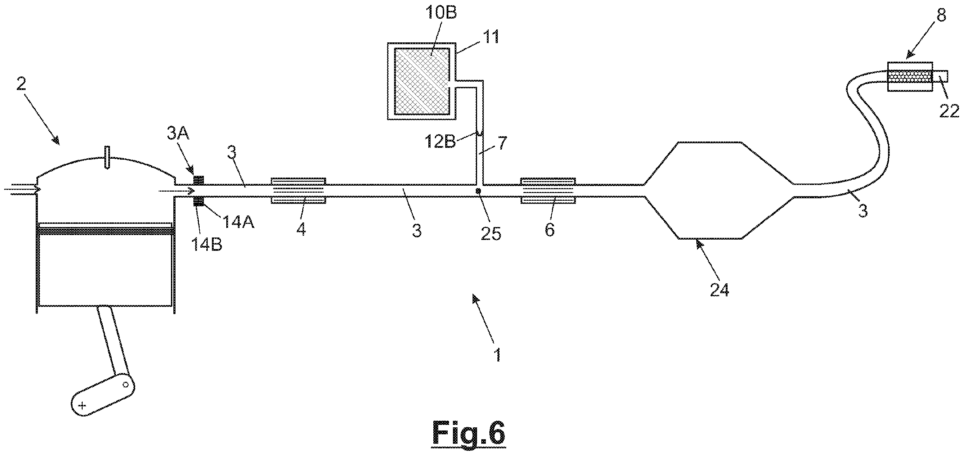

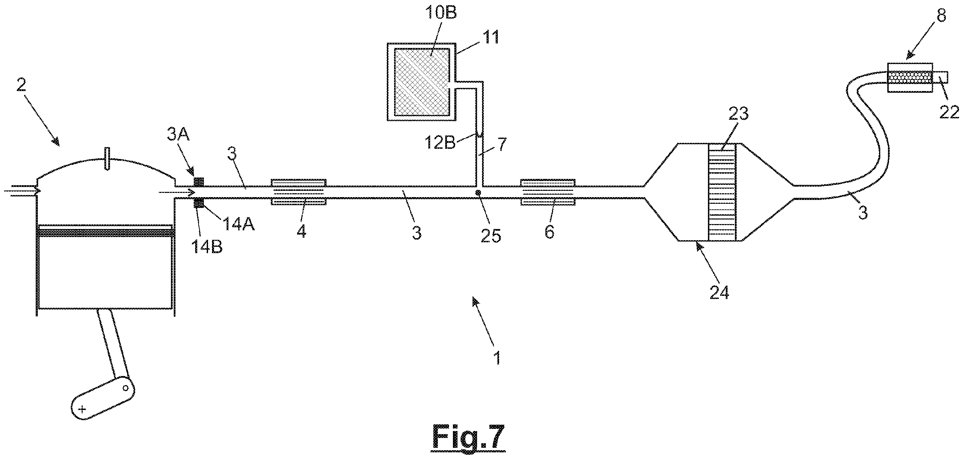

Figures 6 and 7 show an exhaust system typically designed for motorcycles with a two-stroke engine.

Fig. 1 or 6 show an exhaust system 1 for a two-stroke engine comprising a first and a second catalyst 4, 6. A first air injection pipe 7 is connected to a first portion of the main exhaust pipe 3 arranged downstream the first catalyst 4 and upstream of said second catalyst 6 to increase the oxygen content let into the second catalyst 6.

The air is aspirated through the pipe 7 when the pressure of the exhaust gases in the first portion 25 of the main exhaust pipe 3 is lower than ambient pressure.

Said first portion 25 is the part of the main pipe 3 to which the first air injection pipe 7 connects.

The piston engine 2 creates pressure pulses in delivery, because of its typical reciprocating movement. The pressure downstream of the delivery of the engine 2, i.e. inside of the main exhaust pipe 3, has an oscillatory pattern, with phases in which the pressure in the pipe 3 is higher than atmospheric pressure and the phases in which the pressure in the pipe 3 is lower than atmospheric pressure. The pressure wave generated by the two-stroke engine propagates at the speed of sound inside the main exhaust pipe. When the pressure wave expands in the muffler, it bounces back in the exhaust pipe as a suction pressure wave. When the suction pressure wave passes at the first portion 25, a suction pressure is generated inside the first air injection pipe 7. Consequently, a first check valve 12B with which the air injection pipe 7 is provided, opens letting in additional air from the outside into the pipe 7, i.e. towards the main exhaust pipe 3. The same check valve 12B prevents the backflow of air in opposite direction, i.e. from the exhaust pipe 3 towards the outside, when the pressure wave passes through the first portion 25 of the main pipe 3.

In this manner, the overpressure of the exhaust gases of the engine 2 which is cyclically created in the main exhaust pipe 3 does not reach the filter 10B. The valve 12B may be arranged in any intermediate position between the filter 10B and the connection zone of the air injection pipe 7 with the main exhaust pipe 3.

The first injection pipe 7 makes it possible to aspirate air from the outside when the suction pressure caused by the oscillatory pattern of the pressure of the exhaust gases of the engine 2 is created in the main exhaust pipe 3. The air thus injected into the main exhaust pipe 3, rich in oxygen with respect to the exhaust gases of the engine 2, enters the second catalyst 6 together with the exhaust gases.

A first catalysis of unburned substances of exhaust gases occurs inside the first catalyst 4 to reach a first temperature T' at the outlet of the first catalyst 4.

The first catalyst 4 may be positioned at about 5 cm from the first end 3A connected to the two-stroke engine, in order to see its maximum temperature.

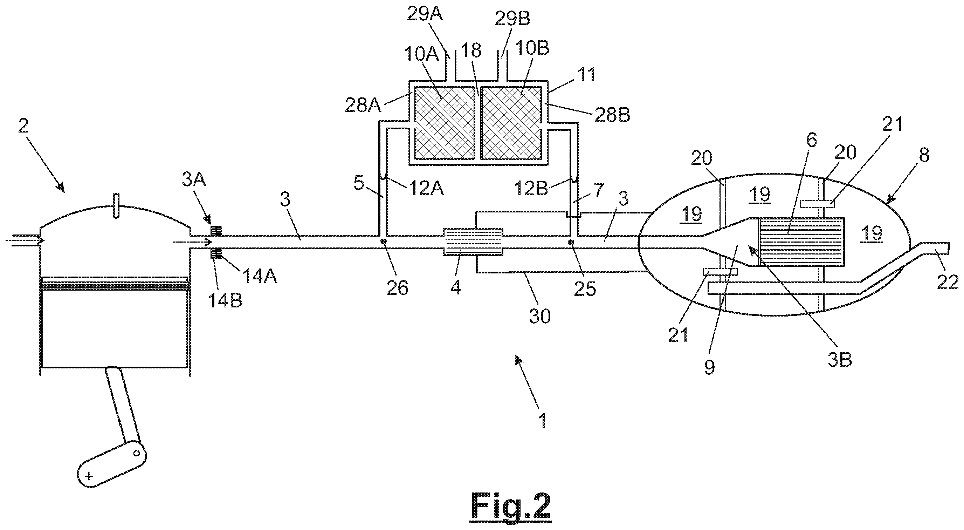

In a first embodiment shown in figure 2, the exhaust system 1 has a further air injection pipe 5, also provided with a check valve 12A, which is a passive check valve 12A, and a filter 10A.

Again in this embodiment, the air enters through the filter 10A and passes through the second check valve 12A, which is preferably a passive check valve 12A, to enter into the main exhaust pipe 3, and in particular into its portion 26, when suction pressure is present in such portion. The operation and type of the second passive check valve 12A is entirely similar to that of the first passive check valve 12B described above.

The second injection pipe 7 make it possible to aspirate air from the outside when the suction pressure caused by the oscillatory pattern of the pressure of the exhaust gases of the engine 2 is created in the main exhaust pipe 3. The air thus injected into the main exhaust pipe 3, rich in oxygen with respect to the exhaust gases of the engine 2, enters into the first catalyst 4 and facilitates the catalysis of the exhaust gases.

When the pressure of the second portion 26 of the main exhaust pipe 3 is lower than atmospheric pressure, air is aspirated into the exhaust pipe 3.

Since the oxygen content in the second portion 26 increases, the catalysis of the first catalyst 4 is more effective and makes it possible to reach a second temperature T" at the outlet of the first catalyst 4, higher than the aforesaid first temperature T'.

The second air injection pipe 5, the respective second check valve 12A and the respective filter 10A are structurally similar to the equivalent elements of the first air injection pipe 7.

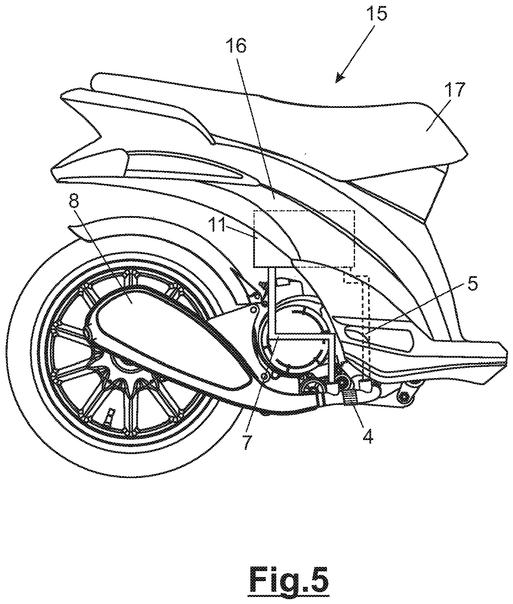

In particular, the filters 10A and 10B can be arranged in a common filter box 11, as shown in figure 2 and 5. The filter box 11 is divided into two compartments 28A, 28B by a partition 18 which prevents a fluid communication between the two compartments 28A, 28B. Each compartment 28A, 28B houses a respective filter 10A, 10B. The division is required to prevent that when one of the two portions 25, 26 of the main exhaust 3 has a higher suction pressure than the other, the exhaust gases are aspirated either exclusively or predominantly by one air injection pipe and not by both. Furthermore, since the suction pressure wave moves at the speed of sound, the opening of the check valves 12A, 12B occurs practically at the same time, therefore a division of the filter box 11 in two compartments 28A, 28B is necessary in order to avoid differences of air intake inside the air injection pipes 5, 7.

The filter box 11 also has two openings 29A, 29B for putting into fluid communication the outside environment with the filters 10A, 10B. The filter box 11 can be connected directly to the frame of the motorcycle. The two openings 29A, 29B are mutually spaced apart and represent the respective openings towards the outside of the two compartments 28A, 28B. The two openings 29A, 29b being mutually spaced apart, the air subtraction phenomenon between the air injection pipes 5 and 7 is further reduced.

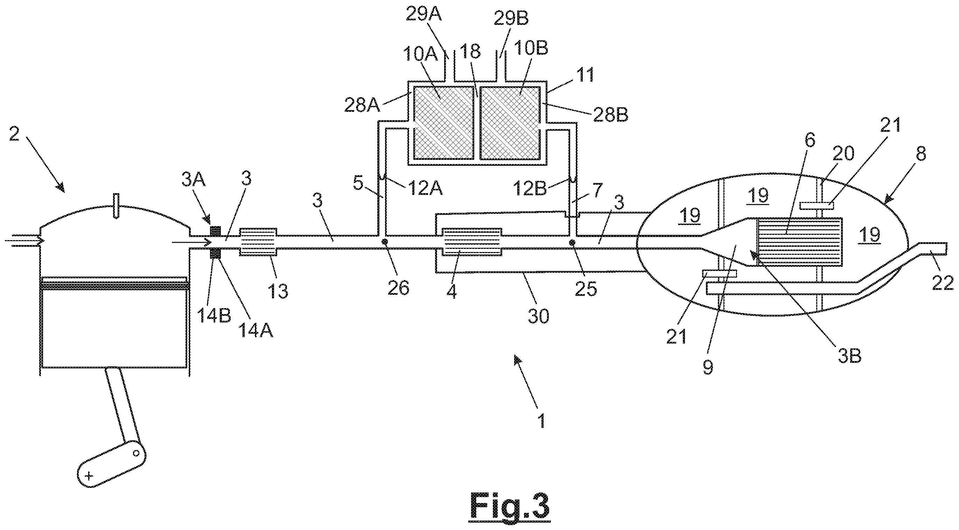

In a second embodiment shown in figure 3, downstream of the first end 3A and upstream of the second air injection pipe 7, the system 1 may comprise a third upstream catalyst 13.

This catalyst 13 may be arranged next to, preferably at less than 7 cm from, and more preferably at less than 5 cm from, the end 3A in order to maximize its heating. The second embodiment differs from the second for the presence of the third upstream catalyst 13 only. In this version of the exhaust system 1, the third upstream catalyst 13 superheats rapidly by virtue of its proximity to the two-stroke engine 2. For this reason, the exhaust gases let out from the third upstream catalyst 13 are warm enough to ignite the first catalyst 4, i.e. take it to its triggering temperature threshold.

The higher temperature let out from the first catalyst 4 together with the high oxygen content due to the air supplied by the second air injection pipe 5, make it possible to reach a third temperature T‴ at the outlet of the first catalyst 4, higher than the aforesaid second temperature T". In this manner, the unburned and harmful substances of the exhaust gases created by the combustion in the two-stroke engine 2 are considerably reduced and the requirements of the standards Euro IV and EURO V are respected.

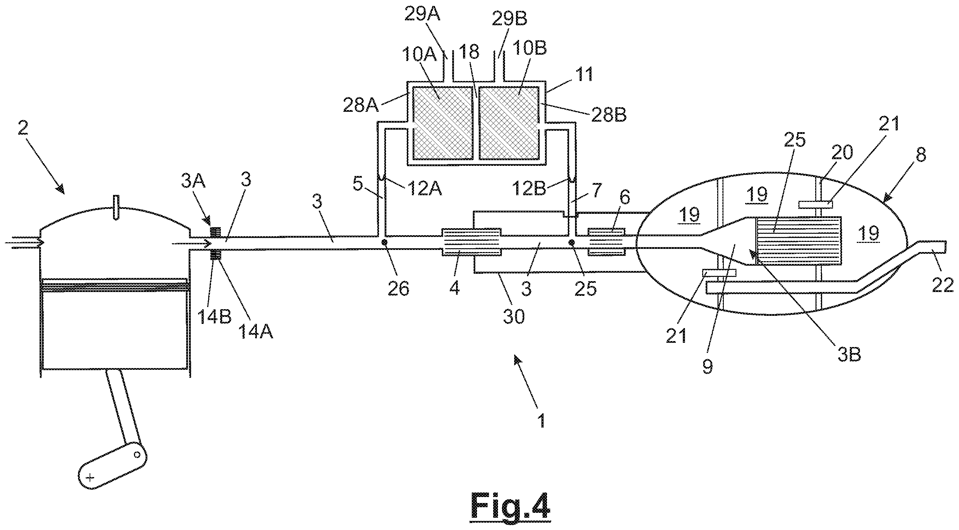

Since the temperature in the first portion 15 of the main exhaust pipe is very high and exposed to direct contact with potentially flammable fluids, a protective shield 30 is arranged coaxially to the main exhaust pipe 3. Said protective shield 30 is configured to cover at least the first portion 25 of the main exhaust pipe 3. Alternatively, as shown in figures 2, 3 and 4, the protective shield 30 extends from the muffler 8 to the first catalyst 4, comprising the latter either partly or completely. In the embodiment in Fig. 4, the protective shield 30 also covers the second catalyst 6. Said protective shield 30 can completely surround the portion of main exhaust pipe 3 or have openings to allow the passage of cooling air.

In a third embodiment shown in figure 4, the exhaust system has a second catalyst 6 arranged downstream of the first air injection pipe 7 and, further downstream, a third downstream catalyst 27 arranged at the end 3B of the main exhaust pipe 3, at the base of a diverging conical portion 9. Said diverging conical portion 9 is shown in detail below.

This embodiment is similar to the first embodiment, with the difference that the second catalyst is arranged along the main exhaust pipe before the muffler and that the third downstream catalyst and not the second catalyst is arranged at the end of the main exhaust pipe inside the muffler. This embodiment allows a greater supply of oxygen to both the first two catalysts, whereby improving the overall catalysis process.

The exhaust system 1 of the first example and of the first three embodiments may include a flange 14A with which it connects to a counter-flange 14B arranged near the delivery of a two-stroke engine 2.

In the first example and in the two embodiments in figures 1, 2 and 3, the second catalyst 6 is arranged inside the muffler 8. In particular, the second catalyst 6 is arranged at one end 3B of the main exhaust pipe 3, opposite to the first end 3A.

The second end 3B of the main exhaust pipe 3 may have a diverging conical shape to increase the pressure of the exhaust gases let into the second catalyst 6 and to allow the installation of a catalyst with larger section.

The exhaust gases catalyzed by the second catalyst 6 enter into a series of expansion chambers 19 of the muffler 8, which are fluidically connected to one another through channels 21 which cross separation baffles 20. The most downstream channel may comprise the exhaust terminal 22. Said chambers 19 are used to silence the exhaust gas because the gas bounces between one chamber and the other before exiting from the exhaust tube 22. The first and second air injection pipes 5,7 extend laterally from the main exhaust pipe 3, as shown in greater detail in figures 2, 3 4 and 5, to allow housing the filter box 11 in a zone of the vehicle in which the air is cleaner and without risk of contact with rainwater or water raised by the wheels of the vehicle.

As shown in figure 5, in the case of motorcycles 15 provided with rear body 16 and saddle compartment (not shown), the filter box 11 may be positioned inside the body 16, preferably under the saddle 17.

Said first and second air injection pipes 5, 7 have an average section, or port, smaller than that of the main exhaust pipe 3. The ratio between the cross-section area of one or both air injection pipes 5,7 and the cross-section area of the main exhaust pipe 3 is less than one. The section of the pipes 5, 7 is selected so as to adjust the ratio of the volumetric air flow rates let into the respective catalysts 4, 6, whereby optimizing system efficiencies.

The first and second air injection pipes 5, 7 may comprise two portions (not shown): a first metal portion welded to the main exhaust pipe 3 and a second rubber portion which connects the first metal portion to the filter box 11 or to the check valves 12A,12B.

The first catalyst 4 is arranged along the main exhaust pipe 3. The main pipe 3 may have a portion of greater diameter than its average cross-section. At this larger section portion of the pipe 3 is arranged inside the first catalyst 4.

The system 1 is of the monolithic type, i.e. the main exhaust pipe 3, the first catalyst 4, at least one portion of the first air injection pipe 5, the second catalyst 6, at least one portion of the second air injection pipe 7 and the muffler 8 are connected to one another in indissoluble manner. This type of connection makes it possible to avoid tampering with internal components to the muffler 1.

In a second example of the exhaust system, shown in figure 6, the system 1 comprises a second catalyst 6 arranged upstream of an expansion zone 24 of the main exhaust pipe 3. The muffler 8 is also arranged downstream of this expansion zone 24. The exhaust terminal 22 is finally present downstream of it.

With the exception of the portion of the main exhaust pipe 3 arranged downstream of the second catalyst 6, the exhaust system 1 is equivalent to the first example shown in figure 1. For this reason, the detailed description of the solution of figure 1 is also valid for the second example.

Again in this example, the first catalyst 4 allows the ignition of the second catalyst 6 and contributes to the overall catalysis process of the exhaust system. The oxygen content at the inlet of the second catalyst 6 is enriched by the air flow aspirated in the main exhaust pipe 3 through the filter 10B, the first check valve 12B and the air injection pipe 7, when the portion 25 is at a pressure lower than atmospheric pressure.

In a third example shown in figure 7, the exhaust system 1 comprises a third alternative downstream catalyst 23 arranged in the expansion zone 24 of the main exhaust pipe 3.

In particular, the expansion zone 24 of the main pipe 3 has a diverging conical sub-zone, followed downstream by a cylindrical sub-zone and followed, in turn, downstream by a converging conical sub-zone. The third alternative downstream catalyst 23 is preferably arranged in said cylindrical sub-zone, for the sake of simplicity of construction. In this portion of the expansion zone 24, the diameter of the main exhaust pipe 3 is maximum, allowing the installation of a catalyst of larger size, which is consequently more efficient.

The third example differs from the second example only for the presence of said third alternative downstream catalyst 23 and therefore descriptive details are in common.

A further differentiating element of the third example can be a third air injection pipe (not shown), connected to the main exhaust pipe 3 downstream of the second catalyst 6 and upstream of the expansion zone 24. This further air injection pipe makes it possible to enrich the oxygen content let into the third alternative downstream catalyst 23.

The catalysts of the various embodiments are preferably three-way. The cross-section areas of the catalysts increase from the engine 2 to the exhaust terminal 22.

The pipes 3, 5 and 7 of the exhaust system are preferably made of stainless steel.

Figure 5 shows an exhaust system 1 according to the second embodiment installed aboard a scooter 15. An exhaust system according to any embodiment can be easily adapted and installed by a person skilled in the art on a motorcycle such as the one shown in figure 3 or on a motorbike.

The present invention is particularly useful for two-stroke engines because of the high content of unburned substances in the exhaust gases with respect to a four-stroke engine. However, the same solution can be used with a four-stroke engine.

The embodiments of the inventive object described hereto are illustrated in the drawings and described in detail above.

## Claims

1. Exhaust system (1) for two-stroke engine (2) comprising:
- a main exhaust pipe (3) having a first end (3A) connectable to an engine (2) outlet for receiving exhaust gases of the engine (2);
- a first catalyst (4) arranged downstream said first end (3A) for performing an initial conversion of the exhaust gases of the engine (2);
- a second catalyst (6) arranged downstream said first catalyst (4) for performing a further conversion of the exhaust gases of the engine (2);
- a first air injection pipe (7) connected to a first portion (25) of the main exhaust pipe (3) arranged downstream said first catalyst (4) and upstream said second catalyst (6), said first air injection pipe (7) comprising a first check valve (12B) of passive type configured to permit a flow of air toward the main exhaust pipe (3) and not vice versa when the pressure inside said first portion (25) of the main exhaust pipe (3) is lower than the ambient pressure:
- a second air injection pipe (5) connected to a second portion (26) of the main exhaust pipe (3) arranged downstream said first end (3A) and upstream said first catalyst (4), said second air injection pipe (5) comprising a second valve configured to permit a flow of air toward the main exhaust pipe (3) and not vice versa when the pressure inside said second portion (26) of the main exhaust pipe (3) is lower the ambient pressure;
- a muffler (8) for silencing and then expelling the exhaust gases converted by the catalysts (4,6),
**characterized in that** the second valve is a check valve (12A) of passive type.

2. Exhaust system (1) according to any one of previous claims, wherein said second catalyst (6) is arranged into said muffler (8) and said first catalyst (4) is arranged along the main exhaust pipe (3).

3. Exhaust system (1) according to previous claim, wherein said second catalyst (6) is arranged at a second end (3B) of the main exhaust pipe (3) downstream a diverging conical portion (9) of the main exhaust pipe (3).

4. Exhaust system (1) according to any one of previous claims, wherein the ends of said first and second air injection pipes (5,7) opposite to the main exhaust pipe (3) are connected to respective filters (10A,10B) contained in a common filter casing (11).

5. Exhaust system (1) according to previous claim, wherein said common filter casing (11) is divided in two compartments (28A, 28B) by a wall (18) which prevents a fluid communication between them; each compartment (28A, 28B) being adapted to receive a respective filter (10A, 10B).

6. Exhaust system (1) according to any one of previous claims, further comprising a third upstream catalyst (13) arranged upstream said first catalyst (4) and downstream said first end (3A).

7. Exhaust system (1) according to claim 6, wherein said third upstream catalyst (13) is arranged close to the first end (3A) and in particular to less than 7 cm from the first end (3A).

8. Exhaust system (1) according to any one of claims 1 to 5, further comprising a third downstream catalyst (27) arranged downstream said second catalyst (6) and into the muffler (8), said second catalyst (6) being arranged along the main exhaust pipe (3) upstream the muffler (8).

9. Exhaust system (1) according to any one of claims 1 to 5, further comprising a third alternative downstream catalyst (23) arranged downstream the second catalyst (6) and in an expansion zone (24) of the main exhaust pipe (3).

10. Exhaust system (1) according to claim 9, wherein the muffler (8) is arranged downstream the expansion zone (24) of the main exhaust pipe (3).

11. Exhaust system (1) according to any one of previous claims, wherein the catalysts (4,6,13,23,27) are all of the same type, preferably of three-way type.

12. Exhaust system (1) according to any one of previous claims, comprising a protective shield arranged coaxially to the main exhaust pipe (3) and configured to cover at least said first portion (25) of the main exhaust pipe (3).

13. Motor vehicle comprising an exhaust system (1) according to any one of the previous claims connected to a two-stroke engine (2) outlet.

## Patentansprüche

1. Abgasanlage (1) für einen Zweitaktmotor (2), umfassend:
- ein Hauptabgasrohr (3), das ein erstes Ende (3A) aufweist, das mit einem Auslass des Motors (2) verbunden werden kann, um Abgase des Motors (2) aufzunehmen;
- einen ersten Katalysator (4), der stromabwärts des ersten Endes (3A) angeordnet ist, um eine anfängliche Umwandlung der Abgase des Motors (2) durchzuführen;
- einen zweiten Katalysator (6), der stromabwärts des ersten Katalysators (4) angeordnet ist, um eine weitere Umwandlung der Abgase des Motors (2) durchzuführen;
- ein erstes Lufteinblasrohr (7), das mit einem ersten Abschnitt (25) des Hauptabgasrohrs (3) verbunden ist, der stromabwärts des ersten Katalysators (4) und stromaufwärts des zweiten Katalysators (6) angeordnet ist, wobei das erste Lufteinblasrohr (7) ein erstes Rückschlagventil (12B) vom passiven Typ umfasst, das so konfiguriert ist, dass es einen Luftstrom in Richtung des Hauptabgasrohrs (3) zulässt und nicht umgekehrt, wenn der Druck im Inneren des ersten Abschnitts (25) des Hauptabgasrohrs (3) niedriger als der Umgebungsdruck ist;
- ein zweites Lufteinblasrohr (5), das mit einem zweiten Abschnitt (26) des Hauptabgasrohrs (3) verbunden ist, der stromabwärts des ersten Endes (3A) und stromaufwärts des ersten Katalysators (4) angeordnet ist, wobei das zweite Lufteinblasrohr (5) ein zweites Ventil umfasst, das so konfiguriert ist, dass es einen Luftstrom in Richtung des Hauptabgasrohrs (3) zulässt und nicht umgekehrt, wenn der Druck im Inneren des zweiten Abschnitts (26) des Hauptabgasrohrs (3) niedriger als der Umgebungsdruck ist;
- einen Schalldämpfer (8), um die von den Katalysatoren (4, 6) umgewandelten Abgase zu dämpfen und dann auszustoßen, **dadurch gekennzeichnet, dass** das zweite Ventil ein Rückschlagventil (12A) vom passiven Typ ist.

2. Abgasanlage (1) nach einem der vorhergehenden Ansprüche, wobei der zweite Katalysator (6) in dem Schalldämpfer (8) angeordnet ist und der erste Katalysator (4) entlang des Hauptabgasrohrs (3) angeordnet ist.

3. Abgasanlage (1) nach einem der vorhergehenden Ansprüche, wobei der zweite Katalysator (6) an einem zweiten Ende (3B) des Hauptabgasrohrs (3) stromabwärts eines divergierenden konischen Abschnitts (9) des Hauptabgasrohrs (3) angeordnet ist.

4. Abgasanlage (1) nach einem der vorhergehenden Ansprüche, wobei die Enden des ersten und des zweiten Lufteinlassrohrs (5, 7), die dem Hauptabgasrohr (3) gegenüberliegen, mit entsprechenden Filtern (10A, 10B) verbunden sind, die in einem gemeinsamen Filtergehäuse (11) enthalten sind.

5. Abgasanlage (1) nach dem vorhergehenden Anspruch, wobei das gemeinsame Filtergehäuse (11) durch eine Wand (18), die eine Fluidverbindung zwischen ihnen verhindert, in zwei Abteile (28A, 28B) unterteilt ist; wobei jedes Abteil (28A, 28B) zur Aufnahme eines j eweiligen Filters (10A, 10B) eingerichtet ist.

6. Abgasanlage (1) nach einem der vorhergehenden Ansprüche, ferner umfassend einen dritten stromaufwärts gelegenen Katalysator (13), der stromaufwärts des ersten Katalysators (4) und stromabwärts des ersten Endes (3A) angeordnet ist.

7. Abgasanlage (1) nach Anspruch 6, wobei der dritte stromaufwärts gelegene Katalysator (13) in der Nähe des ersten Endes (3A) und insbesondere in einem Abstand von weniger als 7 cm von dem ersten Ende (3A) angeordnet ist.

8. Abgasanlage (1) nach einem der Ansprüche 1 bis 5, ferner umfassend einen dritten stromabwärts gelegenen Katalysator (27), der stromabwärts des zweiten Katalysators (6) und in den Schalldämpfer (8) angeordnet ist, wobei der zweite Katalysator (6) entlang des Hauptabgasrohrs (3) stromaufwärts des Schalldämpfers (8) angeordnet ist.

9. Abgasanlage (1) nach einem der Ansprüche 1 bis 5, ferner umfassend einen dritten alternativen stromabwärtigen Katalysator (23), der stromabwärts des zweiten Katalysators (6) und in einer Expansionszone (24) des Hauptabgasrohrs (3) angeordnet ist.

10. Abgasanlage (1) nach Anspruch 9, wobei der Schalldämpfer (8) stromabwärts der Expansionszone (24) des Hauptabgasrohrs (3) angeordnet ist.

11. Abgasanlage (1) nach einem der vorhergehenden Ansprüche, wobei die Katalysatoren (4, 6, 13, 23, 27) alle vom gleichen Typ sind, vorzugsweise vom Dreiwegetyp.

12. Abgasanlage (1) nach einem der vorhergehenden Ansprüche, umfassend ein Schutzschild, das koaxial zum Hauptabgasrohr (3) angeordnet und so konfiguriert ist, dass es zumindest den ersten Abschnitt (25) des Hauptabgasrohrs (3) abdeckt.

13. Kraftfahrzeug, umfassend eine Abgasanlage (1) nach einem der vorhergehenden Ansprüche, die mit einem Auslass eines Zweitaktmotors (2) verbunden ist.

## Revendications

1. Système d'échappement (1) pour moteur à deux temps (2) comprenant :
- un tuyau principal d'échappement (3), dont une première extrémité (3A) peut être reliée à une sortie du moteur (2) pour recevoir des gaz d'échappement du moteur (2) ;
- un premier catalyseur (4), disposé en aval de ladite première extrémité (3A) pour effectuer une conversion initiale des gaz d'échappement du moteur (2) ;
- un deuxième catalyseur (6), disposé en aval dudit premier catalyseur (4) pour effectuer une conversion supplémentaire des gaz d'échappement du moteur (2) ;
- un premier tuyau d'injection d'air (7), relié à une première partie (25) du tuyau principal d'échappement (3) disposé en aval dudit premier catalyseur (4) et en amont dudit deuxième catalyseur (6), ledit premier tuyau d'inj ection d'air (7) comprenant un premier clapet anti-retour (12B) de type passif conçu pour permettre un écoulement d'air vers le tuyau principal d'échappement (3) et non l'inverse lorsque la pression à l'intérieur de ladite première partie (25) du tuyau principal d'échappement (3) est inférieure à la pression ambiante ;
- un second tuyau d'injection d'air (5), relié à une seconde partie (26) du tuyau principal d'échappement (3) disposé en aval de ladite première extrémité (3A) et en amont dudit premier catalyseur (4), ledit second tuyau d'injection d'air (5) comprenant un second clapet conçu pour permettre un écoulement d'air vers le tuyau principal d'échappement (3) et non l'inverse lorsque la pression à l'intérieur de ladite seconde partie (26) du tuyau principal d'échappement (3) est inférieure à la pression ambiante ;
- un silencieux (8) permettant d'atténuer le bruit puis d'expulser les gaz d'échappement convertis par les catalyseurs (4,6), **caractérisé en ce que** le second clapet est un clapet anti-retour (12A) de type passif.

2. Système d'échappement (1) selon l'une quelconque des revendications précédentes, dans lequel ledit deuxième catalyseur (6) est disposé dans ledit silencieux (8) et ledit premier catalyseur (4) est disposé le long du tuyau principal d'échappement (3).

3. Système d'échappement (1) selon la revendication précédente, dans lequel ledit deuxième catalyseur (6) est disposé à une seconde extrémité (3B) du tuyau principal d'échappement (3), en aval d'une partie conique divergente (9) du tuyau principal d'échappement (3).

4. Système d'échappement (1) selon l'une quelconque des revendications précédentes, dans lequel les extrémités desdits premier et second tuyaux d'injection d'air (5, 7) opposées au tuyau principal d'échappement (3) sont reliées à des filtres respectifs (10A, 10B) contenus dans un boîtier commun de filtre (11).

5. Système d'échappement (1) selon la revendication précédente, dans lequel ledit boîtier commun de filtre (11) est divisé en deux compartiments (28A, 28B) par une paroi (18) qui empêche toute communication fluidique entre eux ; chaque compartiment (28A, 28B) étant conçu pour recevoir un filtre respectif (10A, 10B).

6. Système d'échappement (1) selon l'une quelconque des revendications précédentes, comprenant en outre un troisième catalyseur amont (13) disposé en amont dudit premier catalyseur (4) et en aval de ladite première extrémité (3A).

7. Système d'échappement (1) selon la revendication 6, dans lequel ledit troisième catalyseur amont (13) est disposé à proximité de la première extrémité (3A) et en particulier à moins de 7 cm de la première extrémité (3A).

8. Système d'échappement (1) selon l'une quelconque des revendications 1 à 5, comprenant en outre un troisième catalyseur aval (27), disposé en aval dudit deuxième catalyseur (6) et dans le silencieux (8), ledit deuxième catalyseur (6) étant disposé le long du tuyau principal d'échappement (3) en amont du silencieux (8).

9. Système d'échappement (1) selon l'une quelconque des revendications 1 à 5, comprenant en outre un troisième catalyseur aval alternatif (23), disposé en aval du deuxième catalyseur (6) et dans une zone d'expansion (24) du tuyau principal d'échappement (3).

10. Système d'échappement (1) selon la revendication 9, dans lequel le silencieux (8) est disposé en aval de la zone d'expansion (24) du tuyau principal d'échappement (3).

11. Système d'échappement (1) selon l'une quelconque des revendications précédentes, dans lequel les catalyseurs (4, 6, 13, 23, 27) sont tous du même type, de préférence du type à trois voies.

12. Système d'échappement (1) selon l'une quelconque des revendications précédentes, comprenant un écran de protection disposé coaxialement au tuyau principal d'échappement (3) et conçu pour recouvrir au moins ladite première partie (25) du tuyau principal d'échappement (3).

13. Véhicule à moteur comprenant un système d'échappement (1) selon l'une quelconque des revendications précédentes qui est relié à une sortie de moteur à deux temps (2).
